# EUROPÄISCHE PATENTANMELDUNG

(11) **EP 2 998 943 A1**
(43) Veröffentlichungstag der Anmeldung: **23.03.2016**
(21) Anmeldenummer: 14185176.6
(22) Anmeldetag: 17.09.2014
(51) Int. Cl.: G07G 1/00, A47F 9/04, B07C 5/04

(54) **Bestimmung von Füllständen am Checkout-Terminal**

(71) Anmelder: Wincor Nixdorf International GmbH, 33106 Paderborn (DE)
(72) Erfinder: Schäfer, Oliver, 10369 Berlin (DE)
(74) Vertreter: Maikowski & Ninnemann

(57) **Zusammenfassung**

Vorgeschlagen wird ein Checkout-Terminal (1) mit einem Warenannahmebereich (11) zum Annehmen von Waren (2-1), einem Warenerfassungsbereich (12) zum datentechnischen Erfassen der Waren (2-1) und mit einem Warenausgabebereich (13) zum Ausgeben der Waren (2-1), wobei
- eine Steuereinheit (17) des Checkout-Terminals (1) ausgebildet ist zum Steuern des Betriebs des Checkout-Terminals (1);
- der Warenausgabebereich (13) eine erste Packmulde (131) aufweist, die zum temporären Sammeln der Waren (2-1) ausgestaltet ist; ein Warentransportmittel (15) des Checkout-Terminals (1) ausgebildet ist zum Transportieren der Waren (2-1) entlang einer Transportrichtung (T) von dem Warenannahmebereich (11) über den Warenerfassungsbereich (12) hin zu der ersten Packmulde (131) des Warenausgabebereichs (13);
-der Warenerfassungsbereich (12) eine Warenerfassungsvorrichtung (121) mit einem Scanner (121-1) aufweist, der ausgebildet ist zum Scannen einer jeweiligen scannbaren Kennzeichnung (2-11) der innerhalb eines Warenerfassungsvolumens (122) des Warenerfassungsbereichs (12) befindlichen Waren und zum Bereitstellen eines Scannergebnissignals (121-11). Die Warenerfassungsvorrichtung (121) weist eine Vermessungseinheit (121-2) auf, die ausgebildet ist zum Vermessen der innerhalb des Warenerfassungsvolumens (122) befindlichen Waren und zum Bereitstellen eines Vermessungsergebnissignals (121-22). Die Steuereinheit (17) weist einen Rechner (17-1) auf, der ausgebildet ist zum Berechnen eines Füllstandswerts (171) in Abhängigkeit von dem Scannergebnissignal (121-11) und dem Vermessungsergebnissignal (121-22), wobei der Füllstandswert (171) indikativ für ein Warenfüllstandsvolumen der ersten Packmulde (131) ist.

## Beschreibung

Die vorliegende Erfindung betrifft ein Checkout-Terminal gemäß dem Oberbegriff des Patentanspruchs 1, eine Warenerfassungsvorrichtung für ein Checkout-Terminal gemäß dem Oberbegriff des Patentanspruchs 14 sowie ein Verfahren zum Betreiben eines Checkout-Terminals gemäß dem Oberbegriff des Patentanspruchs 15.

Checkout-Terminals werden beispielsweise in Warenverkaufsläden eingesetzt, wo ein Kunde im Rahmen eines Einkaufsvorgangs zunächst einige Waren zusammenstellt und zum Zwecke der Bezahlung dieser ein Checkout-Terminal aufsucht, wo die Waren des Kunden angenommen werden, datentechnisch erfasst werden und sodann wieder an den Kunden ausgegeben werden. Basierend auf der datentechnischen Erfassung der Waren kann ein Endpreis ermittelt werden, den der Kunde für seine Waren zu zahlen hat. Checkout-Terminals können durch eine Service-Kraft bedient werden oder autonom arbeiten (sog. Self-Service Checkout-Terminals).

Ein gattungsgemäßes Checkout-Terminal weist einen Warenannahmebereich zum Annehmen von Waren auf, einen dem Warenannahmebereich nachgelagerten Warenerfassungsbereich zum datentechnischen Erfassen der Waren sowie einen dem Warenerfassungsbereich nachgelagerten Warenausgabebereich zum Ausgeben der datentechnisch erfassten Waren an den Kunden.

Der Warenausgabebereich eines gattungsgemäßen Checkout-Terminals weist eine erste Packmulde auf, die zum temporären Sammeln der datentechnisch erfassten Waren ausgestaltet ist. In der ersten Packmulde werden die Waren gesammelt, so dass der Kunde diese aus dem Warenausgabebereich entnehmen kann und beispielsweise in eine eigene Tasche umladen kann.

Für den Transport der Waren von dem Warenannahmebereich hin zu der ersten Packmulde des Warenausgabebereichs über den Warenerfassungsbereich hinweg entlang einer Transportrichtung ist ein Warentransportmittel vorgesehen.

Üblicherweise steuert eine dafür eingerichtete Steuereinheit den Betrieb des Checkout-Terminals, beispielsweise den durch das Warentransportmittel ausgeführten Transport der Waren.

Ferner weist das gattungsgemäße Checkout-Terminal eine im Warenerfassungsbereich angeordnete Warenerfassungsvorrichtung mit einem Scanner auf, wobei der Scanner ausgebildet ist zum Scannen einer jeweiligen scannbaren Kennzeichnung der innerhalb eines Warenerfassungsvolumens des Warenerfassungsbereichs befindlichen Waren und zum Bereitstellen eines Scannergebnissignal s.

Ein gattungsgemäßes Checkout-Terminal ist beispielsweise aus der WO 2013 / 120 875 A2 bekannt.

Das Fassungsvolumen der ersten Packmulde ist beschränkt, so dass die erste Packmulde nur eine bestimmte Menge von Waren aufnehmen kann. Bei dem vorbekannten Checkout-Terminal ist es nachteilig, dass es zu einem Überfüllen der ersten Packmulde kommen kann.

Aufgabe der vorliegenden Erfindung ist es demnach, ein Checkout-Terminal, eine Warenerfassungsvorrichtung für ein Checkout-Terminal und ein Verfahren zum Betreiben eines Checkout-Terminals vorzuschlagen, bei dem bzw. mit der ein Überfüllen der ersten Packmulde in kostengünstiger und zuverlässiger Weise vermieden wird.

Gelöst wird diese Aufgabe durch einen der Gegenstände der unabhängigen Patentansprüche 1, 14 und 15. Merkmale vorteilhafter Ausführungsformen sind in den abhängigen Ansprüchen angegeben.

Bei dem Checkout-Terminal des Anspruchs 1 weist die Warenerfassungsvorrichtung zusätzlich eine Vermessungseinheit auf, die ausgebildet ist zum Vermessen der innerhalb des Warenerfassungsvolumens befindlichen Waren und zum Bereitstellen eines Vermessungsergebnissignals. Ferner weist die Steuereinheit einen Rechner auf, der ausgebildet ist zum Berechnen eines Füllstandswerts in Abhängigkeit von dem Scannergebnissignal und in Abhängigkeit von dem Vermessungsergebnissignal, wobei der Füllstandswert indikativ für ein Warenfüllstandsvolumen der ersten Packmulde ist.

Die Steuereinheit, die den Betrieb des Checkout-Terminals steuert, berechnet das Warenfüllstandsvolumen der ersten Packmulde nicht nur in Abhängigkeit von dem Scannergebnissignal, sondern auch in Abhängigkeit von dem Vermessungsergebnissignal. Dies erlaubt eine genauere Berechnung des Warenfüllstandsvolumens der ersten Packmulde.

Ferner kann in der ersten Packmulde auf Sensoren zur Berechnung des Warenfüllstandsvolumens verzichtet werden. Die Berechnung des Warenfüllstandsvolumens findet somit zeitlich und örtlich vorgelagert statt und nicht erst in der ersten Packmulde. Sind mehrere Packmulden im Warenausgabebereich vorgesehen, so erfolgt die Berechnung des jeweiligen Warenfüllstandsvolumens zentral bei der Steuereinheit, beispielsweise bezogen auf die Packmulde, die aktuell befüllt wird. Somit kann insgesamt Sensorik eingespart werden, da nicht jede der Vielzahl Packmulden mit einer entsprechenden Sensorik ausgestattet werden muss. Vielmehr kann auf eine derartige Sensorik verzichtet werden.

Die Steuereinheit kann den Betrieb des Checkout-Terminals insbesondere in Abhängigkeit von dem Füllstandswert, also in Abhängigkeit von dem aktuellen Warenfüllstandsvolumen der ersten Packmulde steuern. So kann die Steuereinheit beispielsweise verhindern, dass das Warentransportmittel weitere Waren in die erste Packmulde transportiert, wenn ein maximales Warenfüllstandsvolumen der ersten Packmulde erreicht ist. Somit kann ein Überfüllen der ersten Packmulde sowie die damit einhergehenden Nachteile, wie beispielsweise ein Herabstürzen von Waren von dem Warenausgabebereich und/oder ein Quetschen von Waren in der ersten Packmulde, vermieden werden.

Insgesamt wird ein störungsfreierer Betrieb des Checkout-Terminals erzielt. Folglich erreicht das Checkout-Terminal des Patentanspruchs 1 einen höheren Warendurchsatz bzw. eine schnellere Kundenabfertigung sowie eine erhöhte Kundenzufriedenheit.

Nachfolgend werden weitere Ausführungsformen des Checkout-Terminals des Anspruchs 1 beschrieben. Die zusätzlichen Merkmale dieser weiteren Ausführungsformen können miteinander als auch mit den bereits oben beschriebenen optionalen Merkmalen zum Bilden weiterer Ausführungsbeispiele kombiniert werden, sofern sie nicht ausdrücklich als alternativ zueinander beschrieben worden sind.

Das Checkout-Terminal eignet sich beispielsweise für einen Gebrauch in einem Warenverkaufsladen, wie einem Supermarkt. Bei den von dem Checkout-Terminal angenommenen, datentechnisch erfassten sowie ausgegebenen Waren handelt es sich beispielsweise um Endverbraucherprodukte, wie Lebensmittel, Kleidungsstücke, Haushaltsmittel, Arzneimittel, Heimwerkergegenstände etc. Die vorliegende Erfindung ist allerdings auf keine bestimmten Waren beschränkt.

Das Checkout-Terminal kann insbesondere mit einer Kassiervorrichtung ausgestattet sein, die in Wirkverbindung mit der Warenerfassungsvorrichtung und/oder der Steuereinheit steht, so dass ein Bezahlvorgang für Waren, die ein Kunde zusammengestellt hat, durchgeführt werden kann.

Der Warenausgabebereich mit der ersten Packmulde ist dem Warenerfassungsbereich beispielsweise nachgelagert, der wiederum beispielsweise dem Warenannahmebereich nachgelagert ist.

Beispielsweise verbindet das Warentransportmittel diese drei Bereiche miteinander. Das Warentransportmittel ist beispielsweise in Gestalt eines Förderbands ausgebildet und derart angeordnet, dass es die Waren, die ein Kunde in den Warenannahmebereich gegeben hat, durch den Warenerfassungsbereich hin zur ersten Packmulde des Warenausgabebereichs transportiert. Mit anderen Worten erstreckt sich beispielsweise das Förderband des Warentransportmittels von dem Warenannahmebereich durch den Warenerfassungsbereich bis hin zu einem Eingangsbereich der ersten Packmulde. Das Förderband kann auch mehrere Teilförderbände umfassen, wobei sich beispielsweise ein erstes Teilförderband in den Warenannahmebereich und in den Warenerfassungsbereich erstreckt und ein zweites Teilförderband in den Warenausgabebereich. Die beiden Teilförderbänder können beispielsweise an einer Übergabestelle aneinander angrenzen, so dass das zweite Teilförderband Waren von dem ersten Teilförderband automatisch übernehmen kann.

In dem Warenerfassungsbereich angeordnet ist die Warenerfassungsvorrichtung mit dem Scanner. Der Scanner ist beispielsweise als Tunnelscanner ausgebildet und brückenartig über dem Warentransportmittel angeordnet, so dass das Warentransportmittel die vom Kunden übergegebenen Waren unter dem Tunnelscanner hindurch bis hin zum Warenausgabebereich transportieren. Anstelle des Tunnelscanners kann auch ein anderweitig ausgestalteter Scanner vorgesehen sein, beispielsweise ein Flachscanner, über den die Waren von dem Transportmittel hinweg transportiert werden, oder ein manuell zu bedienender Handscanner.

Auf den Waren ist jeweils eine scannbare Kennzeichnung aufgebracht. Bei der scannbaren Kennzeichnung handelt es sich um eine beliebig ausgestaltete Kennzeichnung, die es dem Scanner erlaubt, eine Identifikation der gescannten Ware vorzunehmen, sofern sich die Waren im Warenerfassungsvolumen befinden. Das Warenerfassungsvolumen bezeichnet beispielsweise ein Volumen, in dem sich die Waren befinden müssen, so dass ein Scannen der Waren durch den Scanner und Vermessen der Waren durch die Vermessungseinheit möglich sind.

Bei der scannbaren Kennzeichnung handelt es sich beispielsweise um einen Barcode, einen QR-Code, ein RFID-Etikett, ein NFC-Etikett, einen Universal-Product-Code (UPC), ein digitales Wasserzeichen und/oder dergleichen. Die vorliegende Erfindung ist auf keinen bestimmten Typ einer scannbaren Kennzeichnung beschränkt. Der Scanner kann beispielsweise auch als RFID-Lesegerät oder als NFC-Lesegerät ausgestaltet sein oder ein Mittel umfassen, das ein Scannen voneinander verschiedener Kennzeichnungen erlauben, beispielsweise Mittel zum Scannen eines Barcodes und eines RFID-Codes.

Das vom Scanner bereitgestellte Scannergebnissignal ist insbesondere indikativ für eine Identifikation der gescannten Ware, beispielsweise einen eindeutigen Produktcode. Anhand des Scannergebnissignals können beispielsweise vorgespeicherte warenbezogene Daten beschafft werden, die der jeweiligen gescannten Ware zugeordnet sind. Diese Beschaffung von warenbezogenen Daten erfolgt beispielsweise über den Scanner und/oder über die Steuereinheit. Bei den warenbezogenen Daten kann es sich insbesondere um Abmessungen der Ware und/oder ein Volumen der Ware handeln, um ein Gewicht der Ware, einen Typ oder eine Kategorie der Ware und/oder Lagerungseigenschaften der Ware. Derartige Daten sind beispielsweise auf einer Datenbank hinterlegt, auf die das Checkout-Terminal, entweder durch den Scanner und/oder durch die Steuereinheit, zugreifen kann. Auf der Datenbank ist beispielsweise hinterlegt, welche räumlichen Abmessungen die gescannte Ware aufweist, welches Gewicht die Ware aufweist, welchen Typ die gescannte Ware aufweist, beispielsweise "zerbrechlich", "zu kühlen", "nicht zu quetschen", etc. Ferner können die warenbezogenen Daten anzeigen, welche Lagerungseigenschaften die gescannte Ware aufweist, ob beispielsweise eine Tendenz zum Umkippen besteht (beispielsweise bei aufrecht stehenden Getränketüte) oder ob eine Möglichkeit zur beschädigungsfreien Volumenreduktion besteht (beispielsweise bei Schwämmen), oder ob die Ware eine Tendenz aufweist, unter andere Waren zu gelangen (z.B. Suppentüten oder ähnlich verpackte Waren) und Ähnliches. Derartige warenbezogene Daten fließen bei einer Ausführungsform in die Berechnung des Füllstandswerts ein, worauf an späterer Stelle noch genauer eingegangen werden wird.

Neben dem Scanner weist die Warenerfassungsvorrichtung außerdem besagte Vermessungseinheit auf, die ausgebildet ist, die Waren, die sich innerhalb des Warenerfassungsvolumens befinden, zu vermessen und ein entsprechendes Vermessungsergebnissignal bereitzustellen.

Die Vermessung der Waren erfolgt beispielsweise optisch, beispielsweise unter Verwendung einer Anzahl von Lichtquellen, wie Lichtquellen, die sichtbares Licht und/oder Infrarot-Licht emittieren, oder akustisch, beispielsweise mittels Ultraschall.

Das Vermessen der Waren kann entweder zeitgleich zum Scannen erfolgen, zeitlich davor oder danach. Bevorzugt erfolgt sowohl das Scannen als auch das Vermessen während eines gemeinsamen Zeitraums.

Das Vermessungsergebnissignal ist beispielsweise indikativ für eine Grundfläche der innerhalb des Warenerfassungsvolumens befindlichen Waren, wobei die Grundfläche einer Oberfläche der Waren entspricht, die der Vermessungseinheit zugewandt ist. Die Grundfläche ist beispielsweise jene Oberfläche der Waren, die die Vermessungseinheit sieht, wenn die Waren die Warenerfassungsvorrichtung passieren, und/oder indikativ für einen Abstand der innerhalb des Warenerfassungsvolumens befindlichen Waren zur Vermessungseinheit.

Die Steuereinheit empfängt sowohl das Scannergebnissignal als auch das Vermessungsergebnissignal. Somit kann die Steuereinheit insbesondere darauf schließen, welche Lagerausrichtung die im Warenerfassungsvolumen befindliche Ware aufweist.

Beispielsweise wird die gescannte Ware anhand des Scannergebnissignals als quaderförmige Getränketüte identifiziert. Die warenbezogenen Daten, die anhand des Scannergebnissignals beschafft worden sind oder bereits als Teil des Scannergebnissignals zur Verfügung gestellt werden, geben beispielsweise an, dass die quaderförmige Getränketüte einen durch eine Tiefe und eine Breite definierten Boden aufweist sowie eine Höhe, die die Tiefe und die Breite um ein Vielfaches übersteigt. Diese Getränketüte könnte auf einer ihrer Seitenflächen (Tiefe x Höhe oder Breite x Höhe) liegen oder aber auf ihrem durch die Tiefe und Breite definierten Boden stehen. Das Scannergebnissignal könnte über die in Frage kommenden Lagerausrichtungen keine Auskunft geben. Da aber die Vermessungseinheit der Warenerfassungsvorrichtung die Ware hinsichtlich ihrer räumlichen Abmessungen vermisst, kann die Steuereinheit beispielsweise darauf schließen, ob die quaderförmige Getränketüte entlang ihrer Höhe auf dem Warentransportmittel liegt oder auf ihrem Boden steht. Eine liegende Getränketüte nimmt in der ersten Packmulde selbstverständlich mehr Raum ein als eine stehende Getränketüte. Gleiches gilt sinngemäß für Getränkeflaschen oder ähnliche Verpackungsformate.

Anhand dieses Beispiels ist demonstriert worden, dass die Kenntnis des Lagerzustands der Ware für die Ermittlung des Füllstandswerts zweckmäßig ist. Wie anhand des eben beschriebenen Beispiels erläutert worden ist, ist die Steuereinheit insbesondere ausgebildet, anhand des Scannergebnissignals und anhand des Vermessungsergebnissignals auf einen derartigen Lagerzustand zu schließen und diese Erkenntnis bei der Berechnung des Füllstandswerts zu berücksichtigen.

Die Berücksichtigung des Vermessungsergebnissignals und des Scannergebnissignals lässt die Steuereinheit beispielsweise ferner darauf schließen, ob eine gescannte Ware möglichweise eine andere Ware verdeckt. Beispielsweise ist die Vermessungseinheit in einer bestimmten Höhe über dem Warentransportmittel angeordnet, sodass anhand eines Vergleichs zwischen dem Abstand der gescannten Ware zur Vermessungseinheit und der Differenz zwischen der Höhe und einer größten Abmessung der gescannten Ware ermittelt werden kann, ob unterhalb der gescannten Waren noch eine weitere Ware liegt oder nicht. Auch diese Information kann in vorteilhafter Weise bei der Bestimmung des Füllstandswerts berücksichtigt werden, insbesondere dann, wenn die gescannte Ware und die darunter befindliche Ware in dieser Konstellationen in die erste Packmulde befördert werden. Die übereinander angeordneten Waren nehmen in der ersten Packmulde weniger Platz ein als nebeneinander angeordnete Waren.

Die Steuereinheit des Checkout-Terminals kann beispielsweise innerhalb des Checkout-Terminals verteilt angeordnet sein oder aber einstückig ausgebildet sein. Beispielsweise umfasst die Steuereinheit für die Zwecke der Berechnung des Füllstandswerts einen Mikrocontroller oder einen anderen programmierbaren Chip. Zum Steuern der Komponenten des Checkout-Terminals steht die Steuereinheit beispielsweise mit dem Warenannahmebereich, dem Warenerfassungsbereich, dem Warenausgabebereich und/oder mit dem Warentransportmittel in Wirkverbindung. Die Steuereinheit kann auch als Teil der Warenerfassungsvorrichtung implementiert sein.

Bei einer Ausführungsform sind/ist die Steuereinheit und/oder der Scanner ausgebildet, anhand des Scannergebnissignals besagte vorgespeicherte warenbezogene Daten zu beschaffen, die der jeweiligen gescannten Ware zugeordnet sind. Für diese Zwecke sind/ist der Scanner und/oder die Steuereinheit beispielsweise an eine Datenbank gekoppelt, die die vorgespeicherten warenbezogenen Daten vorhält. Die Datenbank kann ebenfalls Teil des Checkout-Terminals sein oder aber davon entfernt angeordnet sein. Auf den Ort der Speicherung der warenbezogenen Daten kommt es vorliegend weniger an; es ist vielmehr ausreichend, dass das Checkout-Terminal auf die warenbezogenen Daten zugreifen kann, in welcher Form auch immer dies geschieht. Die warenbezogenen Daten können bereits als Teil des Scannergebnissignals von dem Scanner an die Steuereinheit übermittelt werden.

Bei einer Ausführungsform ist der Rechner der Steuereinheit ausgebildet, die beschafften warenbezogenen Daten mit dem Vermessungsergebnissignal zu vergleichen und in Abhängigkeit des Vergleichs den Füllstandswert zu berechnen. Wie oben anhand des Beispiels der quaderförmigen Getränketüte erläutert worden ist, kann die Steuereinheit basierend auf einen derartigen Vergleich insbesondere auf einen Lagerzustand der datentechnisch erfassten Ware schließen. Je nachdem, ob eine Ware liegend, stehend oder sonst wie von dem Warentransportmittel hin zur ersten Packmulde transportiert wird, ändert sich also der berechnete Füllstandswert.

Bei einer weiteren Ausführungsform ist der Rechner der Steuereinheit ausgebildet, anhand des Vermessungsergebnissignals und anhand der beschafften warenbezogenen Daten wenigstens einen der folgenden Parameter zu ermitteln und bei der Berechnung des Füllstandswerts zu berücksichtigen: Eine Anzahl der im Warenerfassungsvolumen befindlichen Waren; eine Lagerausrichtung der im Warenerfassungsvolumen befindlichen Waren; eine Anordnung der im Warenerfassungsvolumen befindlichen Waren; ein Warenvolumen der im Warenerfassungsvolumen befindlichen Waren.

Somit kann die Steuereinheit beispielsweise darauf schließen, ob Waren in dem Warenerfassungsvolumen beispielsweise übereinander angeordnet sind, ob eine Ware manuell nacherfasst werden muss, in welche Ausrichtung die Waren aufgestellt sind, etc. Auch diese Erkenntnisse werden bevorzugt bei der Berechnung des Füllstandswerts durch den Rechner der Steuereinheit berücksichtigt.

Bei einer weiteren Ausführungsform weist die Steuereinheit einen Speicher auf, der ausgebildet ist zum Speichern eines adaptierbaren Schwellenwerts, wobei die Steuereinheit ferner ausgebildet ist zum Vergleichen des berechneten Füllstandswerts mit dem adaptierbaren Schwellenwert und zum Bereitstellen eines Steuersignals in Abhängigkeit von dem Vergleich, wobei das Steuersignal bevorzugt anzeigt, ob die erste Packmulde weiter zu befüllen ist oder nicht.

Der adaptierbare Schwellenwert ist beispielsweise indikativ für ein maximales Warenfüllstandsvolumen der ersten Packmulde.

Wird dieses überschritten, kann es innerhalb der ersten Packmulde zu Quetschungen von Waren und/oder zum Herunterfallen von Waren aus dem Warenausgabebereich kommen. Um dies zu vermeiden, führt die Steuereinheit bevorzugt kontinuierlich einen Vergleich zwischen dem berechneten Füllstandswert und dem gespeicherten adaptierbaren Schwellenwert durch und stellt in Abhängigkeit des Vergleichs besagtes Steuersignal bereit. Anhand des Steuersignals wird beispielsweise der Transport der Waren durch das Transportmittel unterbrochen oder verlangsamt, wenn das Steuersignal anzeigt, dass die erste Packmulde nicht weiter zu befüllen ist.

Bei einer Ausführungsform weist das Checkout-Terminal ferner eine Benutzerschnittstelle mit einem Eingabemittel zum Empfangen von Benutzereingaben und einem Ausgabemittel zum Ausgeben von für einen Checkout-Vorgang relevanten Informationen auf, wobei das Ausgabemittel ausgebildet ist, in Abhängigkeit von dem Steuersignal anzuzeigen (beispielsweise optisch, akustisch und/oder haptisch), ob die erste Packmulde weiter zu befüllen ist oder nicht. Das Eingabemittel ist ausgebildet, wenigstens eine Benutzereingabe an die Steuereinheit weiterzuleiten, wobei die wenigstens eine Benutzereingabe anzeigt, ob die erste Packmulde weiter zu befüllen ist oder nicht.

Die Steuereinheit ist bevorzugt ausgebildet, den Schwellenwert in Abhängigkeit von der wenigstens einen Benutzereingabe zu adaptieren. Einerseits ist es bei dieser Variante möglich, dass einer Servicekraft, die das Checkout-Terminal bedient, anhand des Ausgabemittels angezeigt wird, dass die erste Packmulde nicht weiter zu befüllen ist. So kann die Servicekraft beispielsweise manuell auf das Geschehen eingreifen und den Transport von weiteren Waren in die erste Packmulde unterbinden oder verlangsamen. Dies kann aber auch, wie oben beschrieben, automatisiert, sprich ohne manuelles Eingreifen durch eine Servicekraft erfolgen. Andererseits hat auch eine Servicekraft die Möglichkeit, der Steuereinheit anzuzeigen, ob die erste Packmulde weiter zu befüllen ist oder ob die Befüllung der ersten Packmulde zu unterbrechen ist. In Abhängigkeit dieser wenigstens einen Benutzereingabe adaptiert die Steuereinheit den Schwellenwert. Mit anderen Worten hat eine Servicekraft die Möglichkeit, die Steuereinheit hinsichtlich der Ausgabe des Steuersignals zu trainieren. Beispielsweise kann die Servicekraft eine durch das Ausgabemittel erhaltene Information, die anzeigt, dass ein maximales Füllstandsvolumen der ersten Packmulde erreicht ist, quittieren, also bestätigen, oder aber ablehnen und so der Steuereinheit aufzeigen, dass eine weitere Befüllung der ersten Packmulde möglich ist. Basierend auf diesen Eingaben korrigiert die Steuereinheit den adaptierbaren Schwellenwert nach unten oder nach oben hin oder aber lässt den adaptierbaren Schwellenwert unverändert.

Bei einer Ausführungsform ist die Steuereinheit ausgebildet, das Checkout-Terminal gemäß einem Normalmodus oder einem Lern-Modus zu betreiben, wobei im Normalmodus die wenigstens eine Benutzereingabe ignoriert wird und keine Adaption des Schwellenwerts erfolgt. Befindet sich das Checkout-Terminal indes im Lern-Modus, akzeptiert die Steuereinheit die wenigstens eine Benutzereingabe und nimmt eine Adaption des Schwellenwerts in Abhängigkeit von der Benutzereingabe vor.

Bei einer weiteren Ausführungsform ist das Warentransportmittel ausgebildet, den Transport der Waren in Abhängigkeit von dem Füllstandswert und/oder in Abhängigkeit von dem Steuersignal zu steuern. Beispielsweise reduziert das Warentransportmittel eine Transportgeschwindigkeit, mit der die Waren von dem Warenannahmebereich hin zur ersten Packmulde transportiert werden, wenn ein bestimmter Füllstandswert erreicht ist. Bei einem anderen Beispiel unterbindet das Warentransportmittel den weiteren Transport von Waren hin zur ersten Packmulde, wenn das Steuersignal anzeigt, dass die erste Packmulde nicht mehr zu befüllen ist.

Bei einer weiteren Ausführungsform umfasst der Warenausgabebereich eine zweite Packmulde und das Checkout-Terminal weist ein entlang einer Bewegungsrichtung zwischen wenigstens einer ersten Trennposition und einer zweiten Trennposition beweglich angeordnetes Trennmittel auf, das ausgebildet ist, die erste Packmulde und die zweite Packmulde räumlich voneinander zu trennen. Befindet sich das Trennmittel in der ersten Trennposition, so erfolgt eine Befüllung der ersten Packmulde. Befindet sich das Trennmittel in der zweiten Trennposition, so erfolgt eine Befüllung der zweiten Packmulde. Die Steuereinheit ist bei dieser Ausbildungsform ausgebildet, das Trennmittel basierend auf dem Steuersignal wahlweise an der ersten Trennposition oder an der zweiten Trennposition zu positionieren. Somit wird ein Überfüllen der ersten und/oder der zweiten Packmulde vermieden.

Bevorzugt weisen die erste Packmulde und die zweite Packmulde dasselbe Fassungsvolumen auf. Somit kann die Steuereinheit ohne weitere Änderungen auch den für die zweite Packmulde berechneten Füllstandswert mit demselben adaptierbaren Schwellenwert vergleichen, um das Steuersignal zu produzieren. Alternativ dazu kann der ersten Packmulde ein erster adaptierbarer Schwellenwert zugeordnet sein und der zweiten Packmulde ein zweiter adaptierbarer Schwellenwert. Dies ist zweckmäßig, wenn die Fassungsvolumina der beiden Packmulden voneinander abweichen.

Obschon vorliegend stets von einer ersten Packmulde und einer zweiten Packmulde die Rede war, ist die vorliegende Erfindung selbstverständlich nicht auf eine oder zwei Packmulden beschränkt. Vielmehr kann eine Vielzahl von Packmulden in dem Warenausgabebereich des Checkout-Terminals vorgesehen sein. Dabei ist es bevorzugt, dass jede der Packmulden ein und dasselbe Fassungsvolumen vorweist und es ist bevorzugt, dass das Trennmittel in Abhängigkeit von dem Füllstandswert und/oder dem Steuersignal automatisch bestimmte, welche der Packmulden befüllt wird.

Zur Lösung der oben genannten technischen Aufgabe werden ferner vorgeschlagen die Warenerfassungsvorrichtung des unabhängigen Patentanspruchs 14 und das Verfahren gemäß dem unabhängigen Patentanspruch 15. Die Warenerfassungsvorrichtung und das Verfahren teilen die Vorteile des oben beschriebenen Checkout-Terminals und weisen Ausführungsformen auf, die den oben beschriebenen Ausführungsformen des Checkout-Terminals sinngemäß entsprechen, insbesondere, wie sie in den abhängigen Ansprüchen definiert sind. Insoweit wird auf die vorstehende Beschreibung verwiesen.

Insbesondere ist es beispielsweise vorgesehen, dass die Warenerfassungsvorrichtung die Steuereinheit des Checkout-Terminals umfasst.

Der der Erfindung zugrunde liegende Gedanke soll nachfolgend anhand des in den Figuren dargestellten Ausführungsbeispiels näher erläutert werden. Es zeigen:

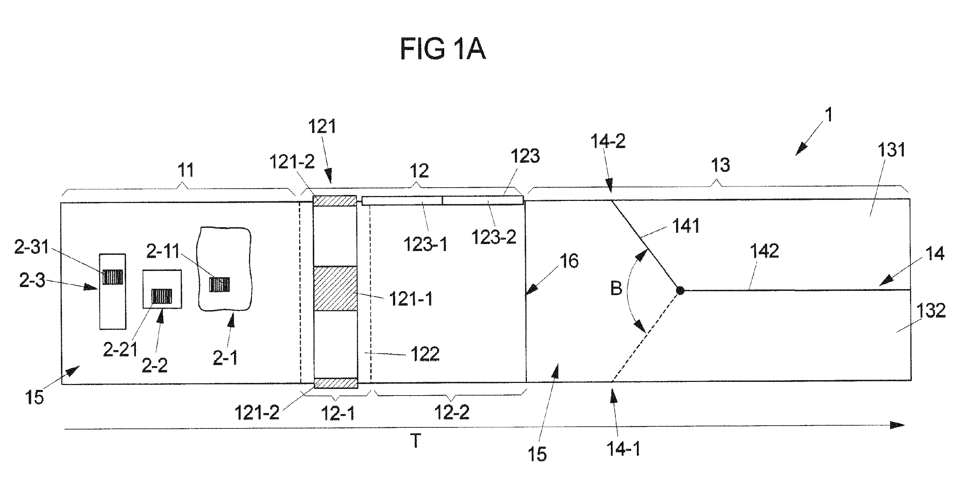

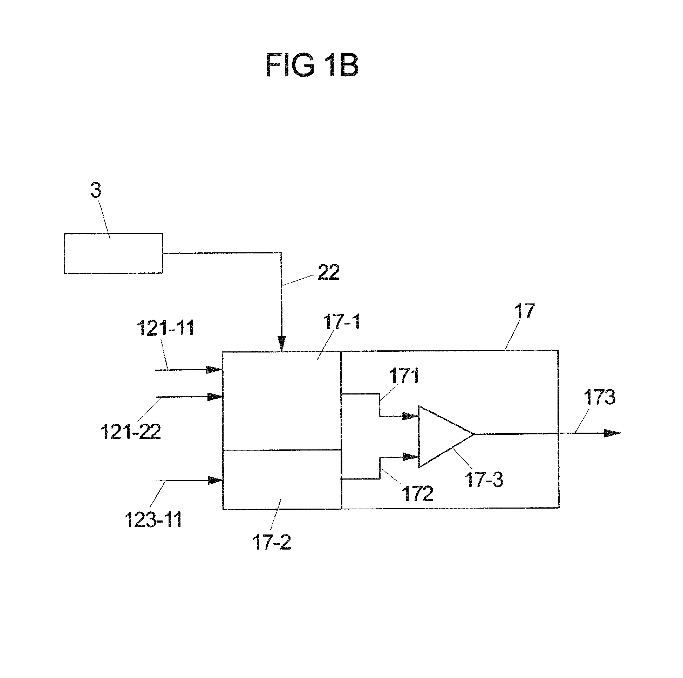

- Fig. 1A und 1B: eine schematische Ansicht einer Ausführungsform eines Checkout-Terminals.

Die Fig. 1A und die Fig. 1B zeigen schematisch und exemplarisch eine Ausführungsform eines Checkout-Terminals 1. Im Folgenden wird auf beide Fig. 1A und Fig. 1B Bezug genommen.

Das Checkout-Terminal 1 eignet sich beispielsweise zur Verwendung in einem Supermarkt oder einem sonstigen Warenverkaufsladen. Mit dem Checkout-Terminal 1 soll ein (in den Figuren nicht dargestellter) Kunde von ihm zusammengestellte Waren 2-1, 2-2 und 2-3 datentechnisch erfassen lassen, sodann beispielsweise einen Bezahlvorgang abwickeln und schließlich die Waren wieder vom Checkout-Terminal 1 entnehmen. Bei den Waren 2-1 bis 2-3 handelt es sich beispielsweise um Lebensmittel, Kleidungsstücke, Arzneimittel, Heimwerkerartikel oder Ähnliches.

Das Checkout-Terminal 1 weist auf einen Warenannahmebereich 11, einen dem Warenannahmebereich in einer Transportrichtung T nachgelagerten Warenerfassungsbereich 12 sowie einen dem Warenerfassungsbereich 12 nachgelagerten Warenausgabebereich 13. Ein in den Figuren nur schematisch dargestelltes Warentransportmittel 15 des Checkout-Terminals 1 transportiert Waren 2-1 bis 2-3 von dem Warenannahmebereich 11 über den Warenerfassungsbereich 12 hinweg bis hin zum Warenausgabebereich 13. Das Warentransportmittel 15 ist beispielsweise in Gestalt einer Anzahl von Förderbändern ausgebildet und erstreckt sich über den Warenannahmebereich 11 und den Warenerfassungsbereich 12 bis hin zum Warenausgabebereich 13.

Ein in den Figuren nicht dargestellter Kunde gibt beispielsweise seine von ihm zusammengestellten Waren 2-1 bis 2-3 in den Warenannahmebereich 11, beispielsweise auf den dort befindlichen Teil des Warentransportmittels 15. Das Warentransportmittel 15 transportiert die Waren 2-1 bis 2-3 entlang der Transportrichtung T in den Warenerfassungsbereich 12.

Im Warenerfassungsbereich 12 ist eine Warenerfassungsvorrichtung 121 vorgesehen, die die Waren 2-1 bis 2-3 datentechnisch erfasst. Der Warenerfassungsbereich 12 unterteilt sich in einen ersten Bereich 12-1 und einen zweiten Bereich 12-2. Der erste Bereich 12-1 umfasst ein Warenerfassungsvolumen 122. Innerhalb dieses Warenerfassungsvolumens 122 müssen sich die Waren 2-1 bis 2-3 befinden, so dass diese von der Warenerfassungsvorrichtung 121 datentechnisch erfasst werden können. Gelegentlich kommt es bei dieser datentechnischen Erfassung durch die Warenerfassungsvorrichtung 121 zu Fehlern bzw. zu Fällen, in denen bestimmte Waren nicht datentechnisch erfasst werden können, weil diese beispielsweise von anderen Waren überdeckt sind. Deshalb ist der zweite Bereich 12-2 des Warenerfassungsbereiches 12 für eine Nacherfassung durch eine (in den Figuren nicht dargestellte) Servicekraft vorgesehen. Die Servicekraft kann also Waren, die von der Warenerfassungsvorrichtung 121 nicht oder nicht richtig erfasst worden sind, manuell nacherfassen. Auch für diese Zwecke ist eine in den Figuren nur schematisch dargestellte Benutzerschnittstelle 123 vorgesehen. Die Benutzerschnittstelle 123 umfasst ein Eingabemittel 123-1, das zum Annehmen von Benutzereingaben der Servicekraft ausgebildet ist, und ein Ausgabemittel 123-2, das zum Ausgeben von für einen Checkout-Vorgang relevanten Informationen für die Servicekraft ausgebildet ist.

Die Warenerfassungsvorrichtung 121 umfasst einen Scanner 121-1 und eine Vermessungseinheit 121-2. Der Scanner 121-1 scannt eine jeweilige scannbare Kennzeichnung der innerhalb des Warenerfassungsvolumens 122 befindlichen Waren und stellt ein Scannergebnissignal 121-11 bereit. Eine derartige scannbare Kennzeichnung ist an der Ware 2-1 schematisch dargestellt und mit der Bezugsziffer 2-11 versehen. Die Ware 2-2 weist eine scannbare Kennzeichnung 2-21 und die Ware 2-3 eine scannbare Kennzeichnung 2-31 auf. Bei den scannbaren Kennzeichnungen 2-11 bis 2-31 kann es sich beispielsweise jeweils handeln um einen Barcode, einen QR-Code, ein RFID-Etikett, ein NFC-Etikett, einen UPC-Code, ), ein digitales Wasserzeichen und/oder dergleichen oder dergleichen.

Der Scanner 121-1 scannt die Kennzeichnung 2-11 und kann somit die Ware 2-1 identifizieren. Die Identifikation der Ware 2-1 durch den Scanner 121-1 erlaubt die Beschaffung vorgespeicherter warenbezogener Daten 22, die der jeweiligen gescannten Ware 2-1 zugeordnet sind. Natürlich kann beispielsweise auf diese Weise der Preis der Ware 2-1 ermittelt werden. Die warenbezogenen Daten 22 können aber auch oder alternativ dazu umfassen: Abmessungen der Ware 2-1 und/oder Volumen der Ware 2-1, ein Gewicht der Ware 2-1, einen Typ oder eine Kategorie der Ware 2-1 (die beispielsweise "zerbrechlich", "nicht zu quetschen", "zu kühlen" etc.), und/oder Lagerungseigenschaften der Ware (wie beispielsweise "fällt leicht um", "kann beliebig gelagert werden", "muss in einer bestimmten Art und Weise gelagert werden" etc.). Gleiches gilt für die Waren 2-2 und 2-3.

Die warenbezogenen Daten 22 werden beispielsweise von einer Datenbank 3 vorgehalten, wobei die Datenbank 3 in dem Checkout-Terminal 1 implementiert sein kann oder davon entfernt sein kann. Auf den Ort der Datenbank 3 kommt es vorliegend weniger an; wesentlich ist vielmehr, das dem Checkout-Terminal 1 die warenbezogenen Daten 22 zugänglich gemacht sind. Die warenbezogenen Daten 22 werden basierend auf dem Scannergebnissignal 121-11 beschafft oder sind bereits in dem Scannergebnissignal 121-11 enthalten.

Der Scanner 121-1 ist beispielsweise als Tunnelscanner ausgebildet und brückenartig über dem Warentransportmittel 15 angeordnet, wie dies schematisch in der Fig. 1A dargestellt ist. Es kommen jedoch auch andere Scannertypen in Betracht, wie beispielsweise ein Flachscanner, ein manuell zu bedienender Handscanner oder Ähnliches. Auf die räumlich körperliche Ausgestaltung des Scanners 121-1 kommt es vorliegend weniger an; wesentlich ist vielmehr, dass der Scanner 121-1 die scannbare Kennzeichnung 2-11 der Ware 2-1 erfasst und somit die Ware 2-1 identifizieren kann. Gleiches gilt sinngemäß für die scannbare Kennzeichnung 2-21 der Ware 2-2 und die scannbare Kennzeichnung 2-31 der Ware 2-3.

Neben dem Scanner 121-1 ist besagte Vermessungseinheit 121-2 vorgesehen. Die Vermessungseinheit 121-2 der Warenerfassungsvorrichtung 121 vermisst die innerhalb des Warenerfassungsvolumens 122 befindlichen Waren und stellt ein Vermessungsergebnissignal 121-22 bereit. Die Vermessung der Waren erfolgt beispielsweise optisch, beispielsweise unter Verwendung einer Anzahl von Lichtquellen, wie Lichtquellen, die sichtbares Licht und/oder Infrarot-Licht emittieren, oder akustisch, beispielsweise mittels Ultraschall.

Insbesondere ist die Vermessungseinheit 121-2 ausgebildet, eine Grundfläche der im Warenerfassungsvolumen 122 befindlichen Waren zu ermitteln und als Teil des Vermessungsergebnissignals 121-22 bereitzustellen und/oder einen Abstand der im Warenerfassungsvolumen 122 befindlichen Waren zur Vermessungseinheit 121-2. Die Grundfläche entspricht beispielsweise einer der Vermessungseinheit 121-2 zugewandten Oberfläche der im Warenerfassungsvolumen 122 befindlichen Waren, also jener Fläche der Waren, die die Vermessungseinheit "sieht".

Der Betrieb des Checkout-Terminals 1 wird gesteuert von einer dafür vorgesehenen Steuereinheit 17. Die Steuereinheit 17 ist in der Fig. 1B lediglich schematisch dargestellt. Sie kann einstückig ausgebildet sein oder aber verteilt in dem Checkout-Terminal 1 angeordnet sein. Die Steuereinheit 17 steht in Wirkverbindung mit zu steuernden Komponenten des Checkout-Terminals 1, beispielsweise mit dem Warentransportmittel 15, mit der Warenerfassungsvorrichtung 121, und weiteren Komponenten des Checkout-Terminals 1. Der Steuereinheit 17 zugeführt sind insbesondere das Vermessungsergebnissignal 121-22 und das Scannergebnissignal 121-11. Ein Rechner 17-1 der Steuereinheit 17 verarbeitet diese beiden Signale 121-11 und 121-22. Darüber hinaus kann die Steuereinheit 17 die warenbezogenen Daten 22 anhand des Scannergebnissignals 121-11 von der Datenbank 3 beschaffen, sofern die warenbezogenen Daten 22 nicht schon als Teil des Scannergebnissignals 121-11 von dem Scanner 121-1 zur Verfügung gestellt werden.

Nachdem die Waren 2-1 bis 2-3 von der Warenerfassungsvorrichtung 121 in dem Warenerfassungsbereich 12 erfasst worden sind, werden diese von dem Warentransportmittel 15 an eine Übergabestelle 16 dem Warenausgabebereich 13 zugeführt.

Der Warenausgabebereich 13 umfasst insbesondere eine erste Packmulde 131 und eine zweite Packmulde 132. Die beiden Packmulden 131 und 132 sind durch ein Trennmittel 14 voneinander getrennt. Das Trennmittel umfasst einen ersten Teil 141, der entlang einer Bewegungsrichtung B wenigstens zwischen einer ersten Trennposition 14-1 und einer zweiten Trennposition 14-2 beweglich angeordnet ist und einen zweiten Teil 142, der ortsfest installiert ist. Das Trennmittel 14 grenzt die beiden Packmulden 131 und 132 räumlich voneinander ab. Beispielsweise ist die Steuereinheit 17 ausgebildet, den ersten Teil 141 des Trennmittels 14 zu steuern und insbesondere zwischen den beiden Trennpositionen 14-1 und 14-2 hin und her zu bewegen. Je nachdem in welcher Trennposition 14-1 und 14-2 sich der erste Teil 141 des Trennmittels 14 befindet, werden die Waren 2-1 bis 2-3 entweder der ersten Packmulde 131 oder der zweiten Packmulde 132 zugeführt. Bei dem gezeigten Beispiel weisen die beiden Packmulden 131 und 132 dasselbe Fassungsvolumen auf.

Es soll verhindert werden, dass es in den Packmulden 131 und 132 zu einer Überfüllung kommt. Dies könnte nämlich dazu führen, dass Waren von dem Warenausgabebereich 13 auf den (in den Figuren nicht dargestellten) Boden fallen oder aufgrund von Quetschungen beschädigt werden. Dies könnte zu einer Störung des Ablaufs des Checkout-Vorgangs führen und somit einerseits zur Unzufriedenheit der Kunden und/oder der Servicekraft sowie insgesamt zu einem niedrigeren Warendurchsatz des Checkout-Terminals 1.

Daher berechnet der Rechner 17-1 der Steuereinheit 17 basierend auf dem Scannergebnissignal 121-11 und basierend auf dem Vermessungsergebnissignal 121-22 einen Füllstandswert 171, der indikativ für ein Warenfüllstandsvolumen einer der beiden Packmulden 131 oder 132 ist.

Für die nachfolgenden Ausführungen sei angenommen, dass sich der erste Teil 141 des Trennmittels 14 in der ersten Trennposition 14-1 befindet, so dass die Waren 2-1 bis 2-3 von dem Warentransportmittel 15 in die erste Packmulde 131 befördert werden. In diesem Fall ist der Füllstandswert 171 indikativ für ein aktuelles Warenfüllstandsvolumen der ersten Packmulde 131.

Beispielsweise umfasst die Steuereinheit 17 einen Speicher 17-2, der einen adaptierbaren Schwellenwert 172 vorhält. Sowohl der Füllstandswert 171 als auch der Schwellenwert 172 sind einem Komparator 17-3 der Steuereinheit 17 zugeführt. Der Komparator 17-3 führt fortlaufend Vergleiche zwischen dem aktuellen Füllstandswert 171 und dem Schwellenwert 172 durch. Der Schwellenwert 172 ist beispielsweise indikativ für ein maximales Warenfüllstandsvolumen der ersten Packmulde 131. In Anhängigkeit von dem Vergleich stellt der Komparator 17-3 ein Steuersignal 173 zur Verfügung. Das Steuersignal 173 zeigt beispielsweise an, ob die erste Packmulde 131 noch weiter zu befüllen ist (der aktuelle Füllstandswert 171 ist kleiner als der Schwellenwert 172) oder ob die Befüllung der ersten Packmulde 131 zu unterbinden oder zu verlangsamen ist (der aktuelle Füllstandswert 173 ist größer oder gleich dem Schwellenwert 172).

Beispielsweise ist das Steuersignal 173 dem Warentransportmittel 15 zugeführt, das den Transport der Waren 2-1 bis 2-3 hin zur ersten Packmulde 131 unterbricht oder verlangsamt, sofern das Steuersignal 173 anzeigt, dass die Befüllung der ersten Packmulde 131 zu unterbinden oder zu verlangsamen ist. Das Steuersignal 173 kann auch dem Ausgabemittel 123-2 der Benutzerschnittstelle 123 zugeführt sein, so dass der Servicekraft des Checkout-Terminals 1 angezeigt werden kann, ob eine weitere Befüllung der ersten Packmulde 131 gewünscht ist oder nicht.

Das Steuersignal 173 kann zu Beginn des Betriebs des Checkout-Terminals 1 und/oder bei der Einführung neuer Warentypen Ungenauigkeiten unterliegen. Beispielsweise zeigt das Steuersignal 173 dann an, dass die erste Packmulde 131 nicht weiter zu befüllen ist, obwohl die erste Packmulde 131 noch Platz für weitere Waren hätte oder es kann dazu kommen, dass das Steuersignal 173 anzeigt, dass die erste Packmulde 131 weiter zu befüllen ist, obwohl das Fassungsvolumen der ersten Packmulde 131 bereits ausgeschöpft ist.

Um diese Ungenauigkeiten zu vermeiden, ist beispielsweise vorgesehen, dass die Steuereinheit 17 ausgebildet ist, das Checkout-Terminal 1 gemäß einem Normal-Modus oder einem Lern-Modus zu betreiben. Befindet sich das Checkout-Terminal 1 in dem Lern-Modus, so ist dem Ausgabemittel 123-2 das Steuersignal 173 zugeführt. Darauf basierend zeigt das Ausgabemittel 123-2 der Servicekraft an, ob die erste Packmulde 131 weiter zu befüllen ist oder nicht. Die Servicekraft hat die Möglichkeit, diese Anzeige anhand einer Benutzereingabe 123-11 über das Eingabemittel 123-1 zu bestätigen. Diese Benutzereingabe 123-11 kann beispielsweise durch Sprachbefehl, durch Bedienen einer Maus, einer Tastatur oder eines Touch-Screens erfolgen.

Jedenfalls ist diese Benutzereingabe 123-11 der Steuereinheit 17 zugeführt.

Die Servicekraft hat aber auch die Möglichkeit, die Anzeige auf dem Ausgabemittel 123-2 abzulehnen. Dies würde beispielsweise dann der Fall sein, wenn das Ausgabemittel 123-2 anhand des Steuersignals 173 anzeigt, dass die erste Packmulde 131 weiter zu befüllen ist, obwohl das Fassungsvolumen bereits erschöpft ist, oder, wenn angezeigt wird, dass die erste Packmulde 131 nicht weiter zu befüllen ist, obwohl noch Fassungsvolumen unausgeschöpft ist. Auch eine derartige Ablehnung wird in Form der Benutzereingabe 123-11 der Steuereinheit 17 mitgeteilt.

Gibt die Servicekraft der Steuereinheit 17 zu erkennen, dass das Steuersignal 173 ungenaue bzw. falsche Informationen anzeigt, so nimmt die Steuereinheit 17 im Lern-Modus eine Adaption des Schwellenwerts 172 vor. Zeigt die Servicekraft der Steuereinheit 17 beispielsweise an, dass die erste Packmulde 131 weiter zu befüllen ist, obwohl das Steuersignal 173 angezeigt hatte, dass die erste Packmulde 131 nicht weiter zu befüllen ist, so erfolgt eine Hochsetzung des Schwellenwerts 172. Im gegenteiligen Fall erfolgt eine Herabsetzung des Schwellenwerts 172.

Der Schwellenwert 172 ist beispielsweise indikativ für ein maximales Fassungsvolumen der ersten Packmulde 131. Sind die beiden Packmulden 131 und 132 gleich groß, haben diese also dasselbe Fassungsvolumen, so ist der adaptierbare Schwellenwert 172 für beide Packmulden identisch. Haben die beiden Packmulden 131 und 132 ein unterschiedliches Fassungsvolumen, so ist für jede Packmulde 131 und 132 in dem Speicher 17-2 ein adaptierbarer Schwellenwert hinterlegt. Im Normal-Modus des Checkout-Terminals 1 ignoriert die Steuereinheit 17 die Benutzereingaben 123-11 und nimmt keine Adaption des adaptierbaren Schwellenwerts 172 vor.

Nachfolgend wird die Berechnung des Füllstandswerts 171 durch den Rechner 17-1 der Steuereinheit 17 etwas näher erläutert.

Wie gesagt, basiert die Berechnung des Füllstandswerts 171 sowohl auf dem Scannergebnissignal 121-11 als auch auf dem Vermessungssignal 121-22. Das Vermessungsergebnissignal 121-22 ist insbesondere indikativ für eine Grundfläche der im Warenerfassungsvolumen 122 befindlichen Waren. Diese Grundfläche entspricht beispielsweise einer Oberfläche der Waren, die der Vermessungseinheit 121-2 zugewandt ist.

Andererseits ist dem Rechner 17-1 das Scannergebnissignal 121-11 zugeführt, das indikativ für eine Identifikation der Waren ist. Das Scannergebnissignal 121-11 kann bereits warenbezogene Daten, wie Abmessungen der Daten (beispielsweise Höhe, Länge und/oder Breite der Waren, Gewicht der Waren, Typ der Waren, Lagerungseigenschaften der Ware etc.) beinhalten. Ist dies nicht der Fall, so beschafft der Rechner 17-1 anhand der Identifikation der gescannten Ware, sprich anhand des Scannergebnissignals 121-11, die warenbezogenen Daten 22 selbst aus einer Datenbank 3.

Der Rechner 17-1 nimmt sodann insbesondere einen Vergleich zwischen den warenbezogenen Daten 22 und dem Vermessungsergebnissignal 121-22 vor. Der Vergleich ist beispielsweise dafür indikativ, in welchem Ausrichtungszustand sich die von dem Transportmittel 15 transportierte Ware befindet. Handelt es sich beispielsweise bei der Ware 2-2 um eine quaderförmige Getränketüte, so lässt dieser Vergleich den Rechner 17-1 darauf schließen, ob die Getränketüte stehend auf dem Warentransportmittel 15 angeordnet ist oder aber liegend. Diese Information ist für die Berechnung des Warenfüllstandsvolumens der ersten Packmulde 131, also für die Berechnung des Warenfüllstandswerts 171 wesentlich, da beispielsweise eine liegende Getränketüte in der ersten Packmulde 131 mehr Platz einnimmt als eine stehende. Andererseits kann der Rechner 17-1 bei der Berechnung des Warenfüllstandswerts 171 berücksichtigen, dass eine stehende quaderförmige Getränketüte auch eine Tendenz aufweist, während des Transports entlang der Transportrichtung T umzukippen. Ein derartiger Unsicherheitsfaktor kann bei der Berechnung des Füllstandswerts 171 ebenfalls berücksichtigt werden.

Ferner kann der Rechner 17-1 aufgrund des Vergleichs zwischen den warenbezogenen Daten 22 und dem Vermessungsergebnissignal 121-22 darauf schließen, ob beispielsweise unterhalb einer Ware weitere Waren verdeckt sind und somit beispielsweise dem Scanvorgang durch den Scanner 121-1 nicht zugänglich sind. Dann kann der Rechner 17-1 die Ausgabe eines Signals veranlassen, das die Servicekraft darauf hinweist, dass die verdeckte Ware manuell nachzuerfassen ist.

Beinhalten die warenbezogenen Daten beispielsweise auch die Angabe des Typs der jeweils gescannten Ware, so kann der Rechner 17-1 beispielsweise bestimmen, dass für die betreffende Ware in der ersten Packmulde 131 mehr Volumen eingeplant werden muss, als bloß das Volumen, das dem Produkt aus Länge x Breite x Höhe entspricht, weil beispielsweise die betreffende Ware nicht zu quetschen ist. Dies ist beispielsweise bei drucksensiblen Lebensmitteln wie Kräutern oder Ähnlichem der Fall.

Aufgrund der genauen Berechnung des aktuellen Warenfüllstandsvolumens der Packmulde, die aktuell befüllt wird, ist ein sicherer und störungsfreier Betrieb des Checkout-Terminals 1 möglich. Beispielsweise ist das Warentransportmittel 15 ausgebildet, den Transport der Waren 2-1 bis 2-3 in Abhängigkeit von dem Füllstandswert 171 und/oder in Abhängigkeit von dem Steuersignal 173 zu kontrollieren, beispielsweise durch Einstellen einer bestimmten Transportgeschwindigkeit und/oder durch Unterbrechung des Transports der Waren 2-21 bis 2-3. Gleiches gilt sinngemäß für das Trennmittel 14. Beispielsweise steuert die Steuereinheit 17 die Bewegung des ersten Teils 141 in Abhängigkeit von dem Steuersignal 173. Zeigt das Steuersignal 173 beispielsweise an, dass die erste Packmulde 131 nicht mehr weiter zu befüllen ist, so veranlasst die Steuereinheit 17 die automatische Bewegung des ersten Teils 171 von der ersten Trennposition 14-1 hin zur zweiten Trennposition 14-2, so dass nur noch die zweite Packmulde 132 befüllt wird.

Die Berechnung des Füllstandswerts 171 beinhaltet beispielsweise das Aufsummieren der einzelnen Volumina der Waren 2-1 bis 2-3. Diese einzelnen Volumina werden beispielsweise basierend auf den warenbezogenen Daten 22 ermittelt und sodann in Abhängigkeit von dem Vermessungsergebnissignal 121-22 adaptiert.

Nachfolgend wird noch etwas näher auf den Lern-Modus des Checkout-Terminals 1 eingegangen. Wie gesagt, beinhaltet die Berechnung des Füllstandswerts 171 beispielsweise das Aufsummieren der (gegebenenfalls adaptierten) Volumina der einzelnen Waren 2-1 bis 2-3. Dabei kann es dazu kommen, dass der aktuell berechnete Füllstandswert 171 von dem aktuellen tatsächlichen Warenfüllstandsvolumen der ersten Packmulde 131 abweicht. Somit kann das Steuersignal 173 fälschlich anzeigen, dass die erste Packmulde 131 nicht mehr zu befüllen ist, obschon das Fassungsvolumen der ersten Packmulde 131 noch nicht voll erschöpft ist, oder dass die erste Packmulde 131 weiter zu befüllen ist, obwohl das Fassungsvolumen der ersten Packmulde 131 bereits erschöpft ist. Befindet sich das Checkout-Terminal in dem Lern-Modus, so muss beispielsweise das Steuersignal 173, wenn es anzeigt, dass die erste Packmulde 131 nicht weiter zu befüllen ist, nicht gleich den Stillstand des Warentransportmittels 15 zur Folge haben, sondern beispielsweise lediglich eine über das Ausgabemittel 123-2 an die Servicekraft erfolgende Meldung, dass die erste Packmulde 131 droht, überzulaufen. Ein akzeptabler Kompromiss zwischen dem Aufkommen von verfrühten oder verspäteten Warnungen kann beispielsweise dadurch minimiert werden, dass besagter Schwellenwert 172 richtig ermittelt wird. Beispielsweise wird der adaptierbare Schwellenwert 172 empirisch ermittelt anhand von Durchschnittswerten über eine repräsentativ ausreichend große Anzahl von Messdurchläufen. Beispielsweise werden dabei die einzelnen Volumina der Ware 2-1 bis 2-3 durch den Rechner 17-1 aufsummiert, und zwar anhand der warenbezogenen Daten 22. Diese Berechnungen können kombiniert werden oder ersetzt werden durch ein Aufsummieren der einzelnen Grundflächen, die dem Rechner 17-1 anhand des Vermessungsergebnissignals 121-22 mitgeteilt werden. Der Schwellenwert 172 kann auch je nach Philosophie des Anbieters der Waren 2-1 bis 2-3 adaptiert werden. Ist beispielsweise gewünscht, dass die erste Packmulde 131 nur bis zu einem geringen Maß befüllt wird, so wird der adaptierbare Schwellenwert 172 herabgesetzt. Zielt die Philosophie des Anbieters der Waren 2-1 bis 2-3 eher auf einen möglichst hohen Warendurchsatz, so wird der adaptierbare Schwellenwert 172 hochgestuft.

Zeigt das Ausgabemittel 123-2 basierend auf dem Steuersignal 173 der Servicekraft an, dass die erste Packmulde 131 zu überfüllen droht, kann die Servicekraft mit Blick auf die betreffende Packmulde 131 die Validität dieser Meldung überprüfen. Bei nicht zutreffen der Meldung kann, je nach Situation und Marktphilosophie die Meldung als "nicht zutreffend" quittiert werden und diese Quittierung in Form der Benutzereingabe 123-11 der Steuereinheit 17 zugeführt werden. Die Servicekraft kann die Meldung auch einfach ignorieren oder quittieren, ohne dass der Steuereinheit 17 eine betreffende Benutzereingabe zugeführt wird, so dass die Meldung lediglich nicht mehr von dem Ausgabemittel 123-2 angezeigt wird. Trifft die Meldung indes zu, kann, je nach Situation und Marktphilosophie, im Lern-Modus diese Meldung als "zutreffend" quittiert werden und die entsprechende Benutzereingabe 123-11 der Steuereinheit 17 zugeführt werden. Es ist dann auch möglich, dass die Servicekraft je nach Menge der eventuell verbleibenden Waren, die noch nicht in der Packmulde 131 enthalten sind, diese manuell im Warenannahmebereich 11 und/oder im Warenerfassungsbereich 12 nacherfasst. Die Servicekraft könnte dem Kunden dann auch melden, zur Packmulde 131 zu gehen und die bereits datentechnisch erfassten Waren einzupacken, so dass weitere Waren automatisch durch das Warentransportmittel 15 der ersten Packmulde 131 zugeführt werden können. Es kann auch weiteres Servicepersonal die bereits in der Packmulde 131 befindlichen Waren platzsparender sortieren, so dass neues Fassungsvolumen für weitere Waren in der Packmulde 131 geschaffen wird. Andererseits ist es möglich, dass die Steuereinheit 17 auf die die Meldung quittierende Benutzereingabe 123-11 veranlasst, dass der erste Teil 141 des Trennmittels 14 von der ersten Position 14-1 hin zur zweiten Trennposition 14-2 bewegt wird, so dass nachfolgende Waren nicht der ersten Packmulde 131 zugeführt werden, sondern der benachbarten zweiten Packmulde 132. Die Steuereinheit 17 kann in diesem Fall den Kunden optisch oder akustisch automatisch darauf hinweisen, dass sich die Waren des Kunden auf mehrere Packmulden 131 und 132 verteilen. Es ist außerdem möglich, dass die Steuereinheit 17 auf den Empfang einer die Meldung quittierenden Benutzereingabe 123-11 veranlasst, dass das Warentransportmittel 15 den Transport der Waren entlang der Transportrichtung T unterbricht.

### Bezugszeichenliste / Verwendete Abkürzungen

- 1: Checkout-Terminal

- 11: Warenannahmebereich

- 12: Warenerfassungsbereich
- 12-1: Erster Bereich
- 12-2: Zweiter Bereich
- 121: Warenerfassungsvorrichtung
- 121-1: Scanner
- 121-11: Scannergebnissignal
- 121-2: Vermessungseinheit
- 121-22: Vermessungsergebnissignal
- 122: Warenerfassungsvolumen
- 123: Benutzerschnittstelle
- 123-1: Eingabemittel
- 123-11: Benutzereingabe
- 123-2: Ausgabemittel

- 13: Warenausgabebereich
- 131: Erste Packmulde
- 132: Zweite Packmulde

- 14: Trennmittel
- 14-1: Erste Trennposition
- 14-2: Zweite Trennposition
- 141: Erster Teil
- 142: Zweiter Teil

- 15: Warentransportmittel

- 16: Übergabestelle

- 17: Steuereinheit
- 17-1: Rechner
- 17-2: Speicher
- 17-3: Komparator
- 171: Füllstandswert
- 172: Schwellenwert
- 173: Steuersignal

- 2-1, 2-2, 2-3: Waren
- 2-11: Scannbare Kennzeichnung
- 22: Warenbezogene Daten

- 3: Datenbank
- T: Transportrichtung
- B: Bewegungsrichtung

## Patentansprüche

1. Checkout-Terminal (1) mit einem Warenannahmebereich (11) zum Annehmen von Waren (2-1), einem Warenerfassungsbereich (12) zum datentechnischen Erfassen der Waren (2-1) und mit einem Warenausgabebereich (13) zum Ausgeben der Waren (2-1), wobei
- eine Steuereinheit (17) des Checkout-Terminals (1) ausgebildet ist zum Steuern des Betriebs des Checkout-Terminals (1);
- der Warenausgabebereich (13) eine erste Packmulde (131) aufweist, die zum temporären Sammeln der Waren (2-1) ausgestaltet ist;
- ein Warentransportmittel (15) des Checkout-Terminals (1) ausgebildet ist zum Transportieren der Waren (2-1) entlang einer Transportrichtung (T) von dem Warenannahmebereich (11) über den Warenerfassungsbereich (12) hin zu der ersten Packmulde (131) des Warenausgabebereichs (13);
- der Warenerfassungsbereich (12) eine Warenerfassungsvorrichtung (121) mit einem Scanner (121-1) aufweist, der ausgebildet ist zum Scannen einer jeweiligen scannbaren Kennzeichnung (2-11) der innerhalb eines Warenerfassungsvolumens (122) des Warenerfassungsbereichs (12) befindlichen Waren und zum Bereitstellen eines Scannergebnissignals (121-11);
**dadurch gekennzeichnet, dass**
- die Warenerfassungsvorrichtung (121) eine Vermessungseinheit (121-2) aufweist, die ausgebildet ist zum Vermessen der innerhalb des Warenerfassungsvolumens (122) befindlichen Waren und zum Bereitstellen eines Vermessungsergebnissignals (121-22);
- die Steuereinheit (17) einen Rechner (17-1) aufweist, der ausgebildet ist zum Berechnen eines Füllstandswerts (171) in Abhängigkeit von dem Scannergebnissignal (121-11) und dem Vermessungsergebnissignal (121-22), wobei der Füllstandswert (171) indikativ für ein Warenfüllstandsvolumen der ersten Packmulde (131) ist.

2. Checkout-Terminal (1) nach Anspruch 1, **dadurch gekennzeichnet, dass** die Steuereinheit (17) und/oder der Scanner (121-1) ausgebildet sind/ist, anhand des Scannergebnissignals (121-11) vorgespeicherte warenbezogene Daten (22) zu beschaffen, die der jeweiligen gescannten Ware (2-1) zugeordnet sind.

3. Checkout-Terminal (1) nach Anspruch 2, **dadurch gekennzeichnet, dass** der Rechner (17-1) ausgebildet ist, die beschafften warenbezogenen Daten (22) mit dem Vermessungsergebnissignal (121-22) zu vergleichen und in Abhängigkeit von dem Vergleich den Füllstandswert (171) zu berechnen.

4. Checkout-Terminal (1) nach Anspruch 2 oder Anspruch 3, **dadurch gekennzeichnet, dass** der Rechner (17-1) ausgebildet ist, anhand des Vermessungsergebnissignals (121-11) und anhand der beschafften warenbezogenen Daten (22) wenigstens einen der folgenden Parameter zu ermitteln und bei der Berechnung des Füllstandswerts (171) zu berücksichtigen:
- eine Anzahl der im Warenerfassungsvolumen (122) befindlichen Waren;
- eine Lagerausrichtung der im Warenerfassungsvolumen (122) befindlichen Waren;
- eine Anordnung der im Warenerfassungsvolumen (122) befindlichen Waren;
- ein Warenvolumen der im Warenerfassungsvolumen (122) befindlichen Waren.

5. Checkout-Terminal (1) nach einem der vorstehenden Ansprüche 2 bis 4, **dadurch gekennzeichnet, dass** die warenbezogenen Daten (22) indikativ sind für wenigstens eines des Folgenden der jeweiligen Ware:
- Abmessungen und/oder Volumen;
- Gewicht;
- Typ und/oder Kategorie;
- Lagerungseigenschaften.

6. Checkout-Terminal (1) nach einem der vorstehenden Ansprüche, **dadurch gekennzeichnet, dass** das von der Vermessungseinheit (121-2) bereitgestellte Vermessungsergebnissignal (121-22) indikativ ist für
- eine Grundfläche der innerhalb des Warenerfassungsvolumens (122) befindlichen Waren, wobei die Grundfläche einer Oberfläche der Waren entspricht, die der Vermessungseinheit (121-2) zugewandt ist; und/oder
- einen Abstand der innerhalb des Warenerfassungsvolumens (122) befindlichen Waren zur Vermessungseinheit (121-2).

7. Checkout-Terminal (1) nach einem der vorstehenden Ansprüche, **dadurch gekennzeichnet, dass** die Steuereinheit (17) einen Speicher (17-2) aufweist, der ausgebildet ist zum Speichern eines adaptierbaren Schwellenwerts (172), wobei die Steuereinheit (17) ferner ausgebildet ist zum Vergleichen des berechneten Füllstandswerts (171) mit dem adaptierbaren Schwellenwert (172) und zum Bereitstellen eines Steuersignals (173) in Abhängigkeit von dem Vergleich, wobei das Steuersignal (173) anzeigt, ob die erste Packmulde (131) weiter zu befüllen ist oder nicht.

8. Checkout-Terminal (1) nach Anspruch 7, **dadurch gekennzeichnet, dass** das Checkout-Terminal (1) ferner eine Benutzerschnittstelle (123) mit einem Ausgabemittel (123-2) zum Ausgeben von für einen Checkout-Vorgang relevanten Informationen aufweist, wobei das Ausgabemittel (123-2) ausgebildet ist, in Abhängigkeit von dem Steuersignal (173) und/oder in Abhängigkeit von dem Füllstandswert (171) anzuzeigen, ob die erste Packmulde (131) weiter zu befüllen ist oder nicht.

9. Checkout-Terminal (1) nach Anspruch 8, **dadurch gekennzeichnet, dass** die Benutzerschnittstelle (123) ein Eingabemittel (123-1) zum Empfangen von Benutzereingaben aufweist, wobei
- das Eingabemittel (123-1) ausgebildet ist, wenigstens eine Benutzereingabe (123-22) an die Steuereinheit (17) weiterzuleiten, wobei die wenigstens eine Benutzereingabe (123-22) anzeigt, ob die erste Packmulde (131) weiter zu befüllen ist oder nicht;
- die Steuereinheit (17) ausgebildet ist, den Schwellenwert (172) in Abhängigkeit von der wenigstens einen Benutzereingabe (123-22) zu adaptieren.

10. Checkout-Terminal (1) nach Anspruch 9, **dadurch gekennzeichnet, dass** die Steuereinheit (17) ausgebildet ist, das Checkout-Terminal (1) gemäß einem Normal-Modus oder einem Lern-Modus zu betreiben, wobei im Normal-Modus die wenigstens eine Benutzereingabe (123-22) ignoriert wird und keine Adaption des Schwellenwerts (172) erfolgt.

11. Checkout-Terminal (1) nach einem der vorstehenden Ansprüche, **dadurch gekennzeichnet, dass** das Warentransportmittel (15) ausgebildet ist zum Steuern des Transports der Waren (2-1) in Abhängigkeit von dem Füllstandswert (171).

12. Checkout-Terminal (1) nach Anspruch 7, **dadurch gekennzeichnet, dass**
- der Warenausgabebereich (13) eine zweite Packmulde (132) aufweist;
- das Checkout-Terminal (1) ein entlang einer Bewegungsrichtung (B) zwischen wenigstens einer ersten Trennposition (14-1) und einer zweiten Trennposition (14-2) beweglich angeordnetes Trennmittel (14) aufweist, das ausgebildet ist, die erste Packmulde (131) und die zweite Packmulde (132) räumlich voneinander zu trennen;
- die Steuereinheit (17) ausgebildet ist, das Trennmittel (14) basierend auf dem Steuersignal (173) wahlweise an der ersten Trennposition (14-1) oder an der zweiten Trennposition (14-2) zu positionieren.

13. Checkout-Terminal (1) nach Anspruch 9, **dadurch gekennzeichnet, dass** die erste Packmulde (131) und die zweite Packmulde (132) dasselbe Fassungsvolumen aufweisen.

14. Warenerfassungsvorrichtung (121) für ein Checkout-Terminal (1), das einen Warenannahmebereich (11) zum Annehmen von Waren (2-1), einen Warenerfassungsbereich (12) zum datentechnischen Erfassen der Waren (2-1) und einen Warenausgabebereich (13) zum Ausgeben der Waren (2-1) aufweist, wobei
- eine Steuereinheit (17) des Checkout-Terminals (1) ausgebildet ist zum Steuern des Betriebs des Checkout-Terminals (1);
- der Warenausgabebereich (13) eine erste Packmulde (131) aufweist, die zum temporären Sammeln der Waren (2-1) ausgestaltet ist;
- ein Warentransportmittel (15) des Checkout-Terminals (1) ausgebildet ist zum Transportieren der Waren (2-1) entlang einer Transportrichtung (T) von dem Warenannahmebereich (11) über den Warenerfassungsbereich (12) hin zu der ersten Packmulde (131) des Warenausgabebereichs (13);
- die Warenerfassungsvorrichtung (121) im Warenerfassungsbereich (12) angeordnet ist und einen Scanner (121-1) aufweist, der ausgebildet ist zum Scannen einer jeweiligen scannbaren Kennzeichnung (2-11) der innerhalb eines Warenerfassungsvolumens (122) des Warenerfassungsbereichs (12) befindlichen Waren und zum Bereitstellen eines Scannergebnissignals (121-11);
**dadurch gekennzeichnet, dass**
- die Warenerfassungsvorrichtung (121) eine Vermessungseinheit (121-2) aufweist, die ausgebildet ist zum Vermessen der innerhalb des Warenerfassungsvolumens (122) befindlichen Waren und zum Bereitstellen eines Vermessungsergebnissignals (121-22);
- die Warenerfassungsvorrichtung die Steuereinheit (17) umfasst, wobei die Steuereinheit (17) einen Rechner (17-1) aufweist, der ausgebildet ist zum Berechnen eines Füllstandswerts (171) in Abhängigkeit von dem Scannergebnissignal (121-11) und dem Vermessungsergebnissignal (121-22), wobei der Füllstandswert (171) indikativ für ein Warenfüllstandsvolumen der ersten Packmulde (131) ist.

15. Verfahren zum Betreiben eines Checkout-Terminals (1), das einen Warenannahmebereich (11) zum Annehmen von Waren (2-1), einen Warenerfassungsbereich (12) zum datentechnischen Erfassen der Waren (2-1) und einen Warenausgabebereich (13) zum Ausgeben der Waren (2-1) aufweist, wobei
- eine Steuereinheit (17) des Checkout-Terminals (1) ausgebildet ist zum Steuern des Betriebs des Checkout-Terminals (1);
- der Warenausgabebereich (13) eine erste Packmulde (131) aufweist, die zum temporären Sammeln der Waren (2-1) ausgestaltet ist;
- der Warenerfassungsbereich (12) eine Warenerfassungsvorrichtung (121) aufweist;
das Verfahren aufweisend die Schritte:
- Transportieren der Waren (2-1) entlang einer Transportrichtung (T) von dem Warenannahmebereich (11) über den Warenerfassungsbereich (12) hin zu der ersten Packmulde (131) des Warenausgabebereichs (13) mit einem Warentransportmittel (15) des Checkout-Terminals (1);
- Scannen einer jeweiligen optischen Kennzeichnung (2-11) der innerhalb eines Warenerfassungsvolumens (122) des Warenerfassungsbereichs (12) befindlichen Waren mit einem Scanner (121-) der Warenerfassungsvorrichtung und Bereitstellen eines Scannergebnissignals (121-11);
**gekennzeichnet durch**
- Vermessen der innerhalb des Warenerfassungsvolumens (122) befindlichen Waren mit einer Vermessungseinheit (121-2) der Warenerfassungsvorrichtung (121) und Bereitstellen eines Vermessungsergebnissignals (121-22);
- Berechnen eines Füllstandswerts (171) in Abhängigkeit von dem Scannergebnissignal (121-11) und dem Vermessungsergebnissignal (121-22) mit einem Rechner (17-1) der Steuereinheit (17), wobei der Füllstandswert (171) indikativ für ein Warenfüllstandsvolumen der ersten Packmulde (131) ist.
